# EUROPÄISCHE PATENTSCHRIFT

(11) **EP 2 362 399 B1**
(45) Veröffentlichungstag und Bekanntmachung des Hinweises auf die Patenterteilung: **16.07.2014**
(21) Anmeldenummer: 11155556.1
(22) Anmeldetag: 23.02.2011
(51) Int. Cl.: H01B 3/02, H01B 3/04, H01B 3/10, H01B 3/12, H02K 3/40

(54) **Verfahren zum Herstellen eines Endenglimmschutzmaterials und ein Endenglimmschutz mit dem Endenglimmschutzmaterial**
Method for producing a glow protection material and a glow protector with the glow protection material
Procédé de fabrication d'un matériau anti-effluves d'extrémités et une protection anti-effluves d'extrémités dotée de ce matériau anti-effluves d'extrémités

(30) Priorität: 26.02.2010 DE 102010009462
(43) Veröffentlichungstag der Anmeldung: 31.08.2011
(73) Patentinhaber: Siemens Aktiengesellschaft, 80333 München (DE)
(72) Erfinder: Kempen, Stefan, 44388, Dortmund (DE); Lang, Steffen, 91054, Erlangen (DE); Pohlmann, Friedhelm, 45355, Essen (DE); Gröppel, Peter, 91052, Erlangen (DE)

(56) Entgegenhaltungen:
- EP-A1- 0 025 583
- WO-A1-00/13191
- WO-A1-03/106362
- WO-A1-03/107512
- US-A1- 2005 194 551
- US-B1- 6 190 775
- Jürgen R. Weidner: "Grenzflächen in elektrischen Isoliersystemen", 3. ETG-Fachtagung: Grenzflächen in elektrischen Isoliersystemen , 16. September 2008 (2008-09-16), 17. September 2008 (2008-09-17), Seiten 1-12, XP002641396, Würzburg, Deutschland Gefunden im Internet: URL:http://www.vde.com/de/fg/ETG/Arbeitsge biete/Q2/Aktuelles/Oeffentlich/Seiten/Gren zflaechen2008.aspx?guidDownload=a78011bc-e 6aa-4bbe-a53d-db191d01a30d [gefunden am 2011-06-09]

## Beschreibung

Die Erfindung betrifft ein Verfahren zum Herstellen eines Endenglimmschutzmaterials und einen Endenglimmschutz für eine Hochspannungsmaschine, wobei der Endenglimmschutz mit dem Endenglimmschutzmaterial hergestellt ist.

Für eine Hochspannungsmaschine, wie beispielsweise einen Turbogenerator in einem Kraftwerk zur Erzeugung von elektrischer Energie, sind ein hoher Wirkungsgrad und eine hohe Verfügbarkeit gefordert. Daraus resultiert in der Regel eine hohe mechanische, thermische und elektrische Beanspruchung der Bauteile des Turbogenerators. Der Turbogenerator weist insbesondere eine Ständerwicklung auf, an die eine besonders hohe Anforderung bezüglich Festigkeit und Zuverlässigkeit gestellt ist. Insbesondere ist das Isoliersystem der Ständerwicklung an der Grenzfläche zwischen der Hauptisolierung und dem Blechpaket der Ständerwicklung durch eine hohe thermische, thermomechanische, dynamische und elektromechanische Betriebsbeanspruchung stark belastet, wodurch das Risiko einer Beschädigung des Isoliersystems der Ständerwicklung durch Teilentladung hoch ist.

Die Ständerwicklung weist einen mit der Hauptisolierung elektrisch isolierten Leiter auf, der in einer Nut gelagert ist, die in dem Blechpaket vorgesehenen ist. Beim Betrieb des Turbogenerators ist der Ständer einer thermischen Wechselbeanspruchung ausgesetzt, wodurch hervorgerufen durch unterschiedliche Wärmeausdehnungsgeschwindigkeiten von dem Leiter und der Hauptisolierung mechanische Spannungen in der Hauptisolierung erzeugt werden können. Dadurch bedingt kann ein örtlich begrenztes Ablösen der Hauptisolierung von dem Leiter auftreten, wodurch Hohlräume zwischen der Hauptisolierung und dem Leiter entstehen, in denen Teilentladungen zünden können. Die Teilentladungen können zu einer Beschädigung der Hauptisolierung führen, wodurch der Turbogenerator nicht betreibbar wäre. An den Nutaustritten steht herkömmlich der Leiter mit seiner Hauptisolierung vor, wo die Grenzfläche zwischen dem Leiter und der Hauptisolierung angeordnet ist. Bei entsprechend hoher elektrischer Spannung in dem Leiter, insbesondere beim An- und Abfahren des Turbogenerators, kann eine Gleitentladung an der Grenzfläche zünden. Dies führt zu einer hohen elektrischen Grenzflächenbeanspruchung, wodurch die elektrische Dauerfestigkeit der Ständerwicklung herabgesetzt ist. Abhilfe schafft das Vorsehen einer Innenpotentialsteuerung (IPS), die an der Grenzfläche zwischen dem Leiter und der Hauptisolierung vorgesehen ist. Die Innenpotentialsteuerung ist elektrisch schwach leitend und stellt dadurch sicher, dass bei den thermomechanisch bedingten Hohlräumen zwischen der Hauptisolierung und dem Leiter keine elektrischen Teilentladungen entstehen können.

Ferner ist zwischen der Hauptisolierung und dem Blechpaket eine weitere Grenzfläche ausgebildet, die ebenfalls einer hohen elektrischen Grenzflächenbeanspruchung ausgesetzt ist. Deshalb ist auf der Hauptisolierung ein schwach leitfähiger und geerdeter Außenglimmschutz (AGS) angebracht. Herkömmlich hat der Außenglimmschutz entlang der Hauptisolierung eine kurze Längserstreckung, so dass im Bereich der Hauptisolierung, an der der Außenglimmschutz sich nicht mehr erstreckt, mit der Umgebungsluft eine weitere Grenzfläche ausgebildet ist. Um die elektrische Grenzflächenbeanspruchung an dieser Grenzfläche herabzusetzen ist hier ein Endenglimmschutz (EGS) vorgesehen. Der Endenglimmschutz ist mit einem Material ausgebildet, das bei zunehmender Spannung, d.h. elektrischer Feldstärke, einen abnehmenden elektrischen Widerstand hat. Dadurch ist der Potentialabbau an der Grenzfläche vergleichmäßigt, wodurch der Endenglimmschutz als eine Potentialsteuerung funktioniert.

Ein Endenglimmschutz ist von einem halbleitenden Lack oder einem halbleitenden Band vorwiegend auf der Basis von Siliziumcarbid bekannt. Ziel der Potentialsteuerung ist es, den tangentialen Potentialabbau entlang der Oberfläche der Hauptisolierung zu vergleichmäßigen und im Idealfall zu linearisieren. Dies wird dann erreicht, wenn pro Längeneinheit entlang des Wicklungsstabs immer derselbe Spannungsbetrag abfällt, indem der Lack oder das Band als ein in Längsrichtung des Wicklungsstabs ortabhängiger und spannungsabhängiger Widerstandsbelag hergestellt ist. Insbesondere werden für den Endenglimmschutz Materialien verwendet, deren elektrische Leitfähigkeit sich mit der elektrischen Feldstärke erhöht. Dadurch wird das Feld aus problematischen Bereichen des Wicklungsstabs mit insbesondere hoher Feldstärke verdrängt. Eine Kenngröße für die nichtlineare elektrische Leitfähigkeit des Materials ist die Stromdichte-Feldstärke-Kennlinie. Die Stromdichte-Feldstärke-Kennlinie hat in der Regel einen S-förmigen Verlauf, wobei versucht wird, den Betriebspunkt des Endenglimmschutzes im Bereich des Wendepunkts der S-förmigen Kurve zu legen. Im Bereich des Wendepunkts ist der Verlauf der Kennlinie im Wesentlichen linear und durch ihre Steigung charakterisiert, wenn die Stromdichte-Feldstärke-Kennlinie doppelt logarithmisch aufgetragen ist.

Herkömmlich ist der Endenglimmschutz von einem auf die Hauptisolierung aufgebrachten Band oder Lack gebildet, wobei das Band oder der Lack von einer Polymermatrix gebildet ist, in die Partikel aus Siliziumcarbid eingebettet sind, wobei die Steigung der doppelt logarithmisch aufgetragenen Stromdichte-Feldstärke-Kennlinie, genannt als der Nichtlinearitätsexponent, etwa 3,3 beträgt. In Abhängigkeit der Korngröße und der Partikeldichte der Siliziumcarbidpartikel in der Polymermatrix entstehen an den Berührungspunkten der Partikel leitfähige Übergänge, so dass sich in dem Endenglimmschutz Strompfade ausbilden können. Die Art und Anzahl dieser Strompfade bestimmt maßgeblich die Lage der Stromdichte-Feldstärke-Kennlinie bzw. den spezifischen elektrischen Widerstand des Endenglimmschutzes.

In WO 00/13191 A1 ist ein Glimmschutzband beschrieben, bei dem ein Trägermaterial mit einem Reaktionsharz imprägnert wird, wobei das Reaktionsharz einen anorganischen Füllstoff aufweist, der eine Beschichtung aus mit Antimon dotiertem Zinnoxid aufweist.

Aufgabe der Erfindung ist es, ein Verfahren zum Herstellen eines Endenglimmschutzmaterials und einen Endenglimmschutz zu schaffen, der mit dem Endenglimmschutzmaterial hergestellt ist, wobei der Endenglimmschutz eine gute Potentialsteuerungsfunktion und eine geringe Baulänge hat.

Die Aufgabe wird mit den Merkmalen der Patentansprüche 1 und 9 gelöst. Bevorzugte Ausgestaltungen dazu sind in den abhängigen Patentansprüchen angegeben.

Das Verfahren zum Herstellen eines Endenglimmschutzes könnte die Schritte aufweisen: Festlegen der doppelt logarithmischen Stromdichte-Feldstärke-Kennlinie des Endenglimmschutzmaterials derart, dass bei einer vorgegebenen Feldstärke ein Designpunkt des Endenglimmschutzmaterials liegt, wobei in dem Designpunkt die Steigung der Stromdichte-Feldstärke-Kennlinie festgelegt wird; Dotieren eines Metalloxids mit mindestens einem Dotierungselement; Bereitstellen einer Mehrzahl von plättchenförmigen Partikeln; Beschichten der Partikel mit dem dotierten Metalloxid; Einbringen der beschichteten Partikel in eine Trägermatrix, so dass von der Trägermatrix mit den Partikeln das Endenglimmschutzmaterial gebildet wird, wobei das Metalloxid und das Dotierungselement derart gewählt werden, dass die Stromdichte-Feldstärke-Kennlinie des Endenglimmschutzmaterials im Designpunkt die Steigung hat. Ein Endenglimmschutz für eine Hochspannungsmaschine weist das Endenglimmschutzmaterial auf. Beim Entwurf des Endenglimmschutzes wird in Abhängigkeit der Eigenschaften eines Isoliersystems der Hochspannungsmaschine eine entsprechend angepasste Stromdichte-Feldstärke-Kennlinie gefordert, insbesondere im Designpunkt. Eine so vorgegebene Materialwunschkennlinie kann durch das dotierte Metalloxid realisiert werden. Hierbei legen die verwendeten Materialien, nämlich das Dotierungselement und das Metalloxid, gemeinsam die Steigung der doppelt logarithmisch aufgetragenen Stromdichte-Feldstärke-Kennlinie im Designpunkt fest.

Bevorzugtermaßen weist das Verfahren zum Herstellen des En denglimmschutzmaterials den Schritt auf: Festlegen der doppelt logarithmischen Stromdichte-Feldstärke-Kennlinie des Endenglimmschutzmaterials derart, dass im Designpunkt der Wert der Stromdichte festgelegt wird, wobei der Dotierungsgrad derart gewählt wird, dass die Stromdichte-Feldstärke-Kennlinie des Endenglimmschutzmaterials im Designpunkt die

Stromdichte hat. Ferner ist es bevorzugt, dass die Steigung der doppelt logarithmischen Stromdichte-Feldstärke-Kennlinie im Designpunkt im Wesentlichen konstanz ist. Der Dotierungsgrad wird ferner bevorzugt derart gewählt, dass die Menge an dem Dotierungselement in dem Metalloxid zwischen 0 und 30 Gew-.% liegt. Durch die Menge des Dotierungselements in dem Metalloxid kann der spezifische elektrische Widerstand des Endenglimmschutzmaterials vorteilhaft eingestellt werden. Das dadurch entstandene teilleitfähige Endenglimmschutzmaterial dient als Beschichtung für die Partikel, die wiederum als ein Füllstoff in der Trägermatrix eingesetzt werden.

Ferner ist es erfindungsgemäß, dass die Partikelmassenkonzentration der Partikel in der Trägermatrix derart gewählt wird, dass das Endenglimmschutzmaterial oberhalb der Perkulationsschwelle ist. Hierbei ist es bevorzugt, dass die Partikelmassenkonzentration der Partikel bei mehr als 25 Gew.% liegt Ab dieser bestimmten Partikelmassenkonzentration in der Trägermatrix befindet sich das Endenglimmschutzmaterial oberhalb der Perkulationsschwelle und der Oberflächenwiderstand des Endenglimmschutzmaterials ändert sich kaum mit steigender Partikelmassenkonzentration. Dadurch unterliegt das Endenglimmschutzmaterial kaum Schwankungen im Oberflächenwiderstand, der dadurch gut reproduzierbar ist.

Die Partikel sind bevorzugt aus Glimmer, Siliziumcarbid, einem undotiertem Metalloxid, insbesondere Aluminiumoxid. Durch die planare Struktur der Partikel wird eine verbesserte Kontaktierung der teilleitfähigen Partikel untereinander erreicht. Bevorzugtermaßen wird das die Partikel beschichtende Metalloxid aus der Gruppe gewählt: Metalloxid in binärer und tertiärer Mischphase insbesondere Zinnoxid, Zinkoxid, Zinkstannat, Titanoxid, Bleioxid, Siliziumcarbid. Das Dotierungselement wird bevorzugt aus der Gruppe gewählt: Antimon, Indium, Cadmium.

Außerdem wird beim Einbringen der beschichteten Partikel in die Trägermatrix diese bevorzugt mit einem Lösungsmittel versetzt, wodurch beim Verdunsten des Lösungsmittels in der Trägermatrix Konvektionsströme sich ausbilden, mit denen die Partikel in der Trägermatrix ausgerichtet werden. Dies führt vorteilhaft zu einer optimalen Kontaktierung der Partikel untereinander. Des Weiteren ist durch die planare Geometrie der Partikel ein unerwünschtes Sedimentieren der Partikel in der Trägermatrix erzielt.

Dadurch ist es vorteilhaft erreicht, dass das mit dem erfindungsgemäßen Verfahren hergestellte Endenglimmschutzmaterial eine gezielt eingestellte Stromdichte-Feldstärke-Kennlinie mit einer gezielt eingestellten Steigung im Designpunkt hat, wenn die Stromdichte-Feldstärke-Kennlinie doppelt logarithmisch aufgetragen ist. Dadurch können vorteilhaft betriebsbedingte Vorgaben bei dem Entwurf des Endenglimmschutzes mit dem Endenglimmschutzmaterial realisiert werden. Ferner ist mit dem erfindungsgemäßen Endenglimmschutz vorteilhaft eine Reduktion der Steuerung des elektrischen Widerstands, von Querempfindlichkeiten (Temperatur, Herstellungs- und Verarbeitungsprozess, thermomechanische Einflussgrößen) erreicht. Außerdem weist der erfindungsgemäße Endenglimmschutz vorteilhaft eine hohe Dauertemperaturbeständigkeit auf. Durch die gezielt einstellbare Stromdichte-Feldstärke-Kennlinie ist es möglich, dass der Endenglimmschutz für die Hochspannungsmaschine mit möglichst kurzer Baulänge versehen ist, obwohl der Endenglimmschutz eine vorteilhafte Potentialsteuerung bewirkt. Dadurch kann der erfindungsgemäße Endenglimmschutz vorteilhaft in Längsrichtung eines Wicklungsstabs der Hochspannungsmaschine kurz ausgeführt sein.

Im Folgenden wird ein bevorzugtes Ausführungsbeispiel eines erfindungsgemäßen Endenglimmschutzes anhand der beigefügten schematischen Zeichnungen erläutert. Es zeigen:
- Figur 1: einen Querschnitt eines Turbogeneratorständers mit dem erfindungsgemäßen Endenglimmschutz;
- Figur 2: einen Ausschnitt eines erfindungsgemäßen Endenglimmschutzmaterials des Endenglimmschutzes aus Figur 1;
- Figur 3: ein Diagramm einer doppelt logarithmisch aufgetragenen Stromdichte-Feldstärke-Kennlinie des Endenglimmschutzmaterials aus Figur 2;
- Figur 4: ein Diagramm über den Verlaufs eines Oberflächenwiderstands in Abhängigkeit einer Partikelmassenkonzentration des Endenglimmschutzmaterials aus Figur 2;
- Figur 5: eine vergrößerte Darstellung eines Ausschnitts des Endenglimmschutzmaterials aus Figur 2; und
- Figur 6: eine schematische Darstellung des Ausschnitts aus Figur 5 mit Strompfaden durch das Endenglimmschutzmaterial.

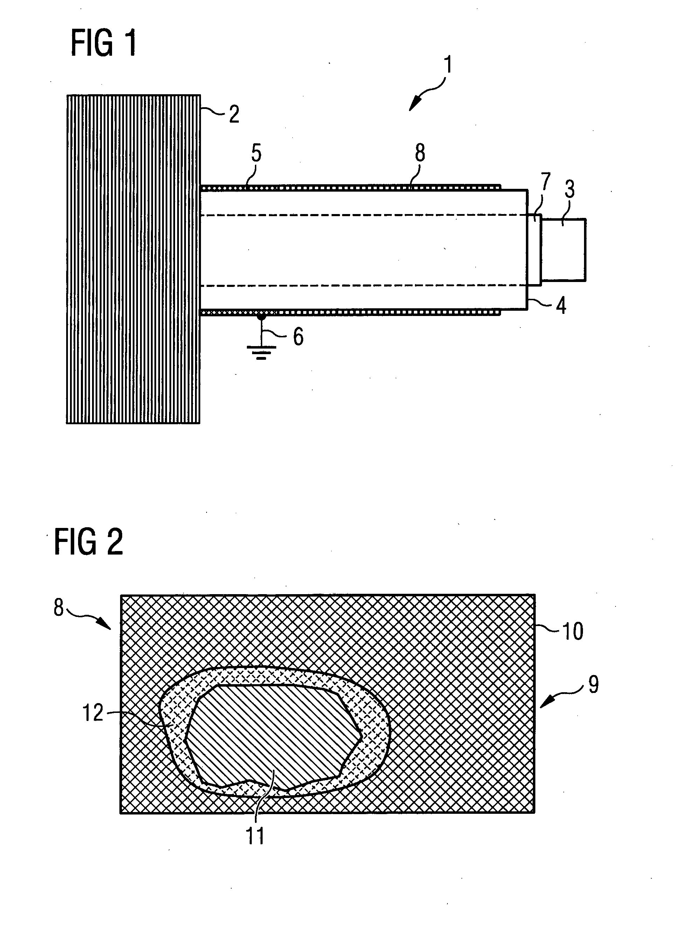

Wie es aus Figuren 1 bis 6 ersichtlich ist, weist ein Turbogeneratorständer 1 ein Ständerblechpaket 2 auf, in dem Nuten zum Unterbringen eines Wicklungsstabs 3 vorgesehen sind. Der Wicklungsstab 3 ist mit einer Hauptisolierung 4 umgeben, wobei der Wicklungsstab 3 mit seiner Hauptisolierung 4 und mit seinem einen Ende aus dem Ständerblechpaket 2 vorsteht. An der Austrittsstelle des Wicklungsstabs 3 aus dem Ständerblechpaket 2 ist ein Außenglimmschutz 5 vorgesehen, der die Hauptisolierung 4 ummantelt und mit einer Erdung 6 geerdet ist. Außerdem ist am freiliegenden Längsende der Hauptisolierung 4 eine Innenpotentialsteuerung 7 vorgesehen. Zwischen der Innenpotentialsteuerung 7 und dem Außenglimmschutz 5 ist die Hauptisolierung 4 ummantelnd ein Endenglimmschutz 8 angebracht. Der Endenglimmschutz 8 ist von einem Endenglimmschutzmaterial 9 gebildet, das eine Trägermatrix 10 aufweist. Die Trägermatrix 10 ist beispielsweise ein Harz, das als Lack auf der Hauptisolierung 4 aufgebracht ist. In der Trägermatrix 10 sind Partikel 11 eingeschlossen, die mit einer Beschichtung 12 jeweils versehen sind.

Das Endenglimmschutzmaterial 9 ist mit den folgenden Schritten hergestellt: Zuerst werden die doppelt logarithmisch aufgetragene Stromdichte-Feldstärke-Kennlinie des Endenglimmschutzmaterials 9 derart festgelegt, dass bei einer Feldstärke E0 (18) ein Designpunkt 16 des Endenglimmschutzmaterials 9 liegt, wobei in dem Designpunkt 16 die Steigung 19 der Stromdichte-Feldstärke-Kennlinie 15 festgelegt wird. Dann wird ein Metalloxid mit mindestens einem Dotierungselement dotiert. Sodann werden eine Mehrzahl an den Partikeln 11 bereitgestellt, die plättchenförmig ausgebildet sind. Die Partikel 11 werden dann mit dem dotierten Metalloxid beschichtet. Schließlich werden die beschichteten Partikel 11 in die Trägermatrix 10 eingebracht, so dass von der Trägermatrix 10 mit den Partikeln 11 das Endenglimmschutzmaterial 9 gebildet wird. Das Metalloxid und das Dotierungselement sind derart gewählt worden, dass das die Stromdichte-Feldstärke-Kennlinie 15 des Endenglimmschutzmaterials 9 im Designpunkt 16 die Steigung 19 hat.

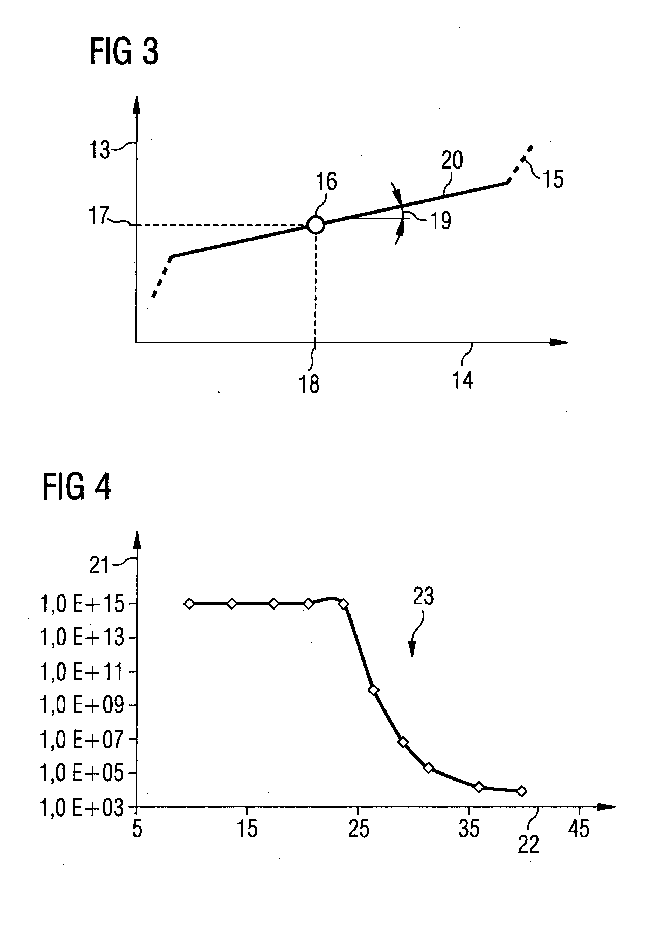

In Fig. 3 ist die Stromdichte-Feldstärke-Kennlinie 15 des Endenglimmschutzmaterials 9 in einem Diagramm gezeigt, wobei die Stromdichte 13 auf der Ordinate und die Feldstärke 14 auf der Abszisse aufgetragen sind. Die Stromdichte-Feldstärke-Kennlinie 15 hat einen S-förmigen Verlauf, wobei im Bereich des Wendepunkts der Stromdichte-Feldstärke-Kennlinie 15 der Designpunkt 16 liegt. Im Designpunkt 16 ergibt sich für das Endenglimmschutzmaterial 9 bei einer Feldstärke 18 (E0) die Stromdichte 17 (J0), wobei die Stromdichte-Feldstärke-Kennlinie 15 im Designpunkt 16 die Steigung 19 hat. Um den Designpunkt 16 hat die Stromdichte-Feldstärke-Kennlinie 15 einen ausgeprägt linearen Verlauf 20.

Des Weiteren wird das Endenglimmschutzmaterial 9 mit den folgenden Schritten hergestellt: es werden die doppelt logarithmische Stromdichte-Feldstärke-Kennlinie 15 des Endenglimmschutzmaterials 9 derart festgelegt, dass im Designpunkt 16 der Wert der Stromdichte 17 (J0) festgelegt wird, wobei der Dotierungsgrad derart gewählt wird, dass das die Stromdichte-Feldstärke-Kennlinie 15 des Endenglimmschutzmaterials 9 im Designpunkt 16 die Stromdichte 17 (J0) hat. Die Steigung 19 der doppelt logarithmischen Stromdichte-Feldstärke-Kennlinie 15 ist um den Designpunkt 16 im Wesentlichen konstant. Der Dotierungsgrad wird derart gewählt, dass die Menge an dem Dotierungselement in dem Metalloxid zwischen 0 und 30 Gew.% liegt.

Ferner wird die Partikelmassenkonzentration der Partikel 11 in der Trägermatrix 10 derart gewählt, dass das Endenglimmschutzmaterial 9 oberhalb der Perkulationsschwelle 23 liegt. In Fig. 4 ist ein Diagramm gezeigt, in dem der Verlauf des Oberflächenwiderstands 21 des Endenglimmschutzmaterials 9 in Abhängigkeit der Partikelmassenkonzentration 22 dargestellt ist. Es zeigt sich, dass im Bereich 25 Gew.% Partikelmassenkonzentration 22 sich die Perkulationsschwelle 23 einstellt, so dass die Partikelmassenkonzentration 22 für das Endenglimmschutzmaterial 9 bei mehr als 25 Gew.% der Partikel 11 in der Trägermatrix 10 gewählt wird.

Die Partikel 11 sind plättchenförmig ausgebildet, wobei die die Partikel 11 bildenden Materialien Glimmer, Siliziumcarbid, ein undotiertes Metalloxid, insbesondere Aluminiumoxid, sein können. Ferner kann das Metalloxid, mit dem die Partikel 11 beschichtet sind, aus der Gruppe gewählt werden: Metalloxid in binärer und tertiärer Mischphase, insbesondere Zinnoxid, Zinkoxid, Zinkstannat, Titanoxid, Bleioxid, Siliziumcarbid. Das Dotierungselement kann aus der Gruppe gewählt werden: Antimon, Indium, Cadmium. Die Trägermatrix 10 ist eine Kunststoffmatrix, die aus Harz hergestellt ist. Die Kunststoffmatrix kann als Lack auf die Hauptisolierung 4 oder als um die Hauptisolierung 4 gewickeltes Band aufgebracht sein. Beim Einbringen der beschichteten Partikel 11 in die Trägermatrix 10 wird diese mit einem Lösungsmittel versetzt, wodurch beim Verdunsten des Lösungsmittels in der Trägermatrix 10 Konvektionsströme sich ausbilden, mit denen die Partikel 11 in der Trägermatrix 10 ausgerichtet werden.

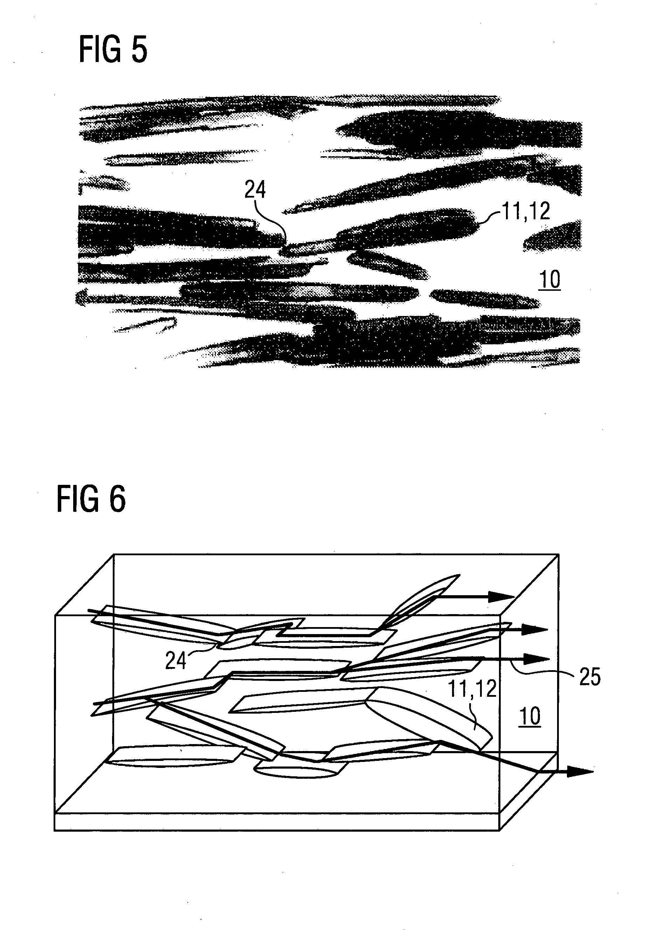

In Fig. 5 ist ein Schnitt durch das Endenglimmschutzmaterial 9 gezeigt. Die Partikel 11 sind plättchenförmig ausgebildet, wobei die Partikelmassenkonzentration 22 derart gewählt ist, dass sich zwischen den Partikeln 11 elektrisch leitende Kontaktstellen 24 ausbilden. Über diese leitenden Kontaktstellen 24 ergeben sich beim Aussetzen des Endenglimmschutzmaterials 9 einer Feldstärke Strompfade 25, die in Fig. 6 schematisch dargestellt sind.

## Patentansprüche

1. Verfahren zum Herstellen eines Endenglimmschutzmaterials (9), mit den Schritten:
- Dotieren eines Metalloxids mit mindestens einem Dotierungselement, so dass ein teilleitfähiges Material entsteht;
- Bereitstellen einer Mehrzahl an plättchenförmigen Partikeln (11);
- Beschichten der Partikel (11) mit dem dotierten Metalloxid (12);
- Einbringen der beschichteten Partikel (11, 12) in eine Trägermatrix (10), so dass von der Trägermatrix (10) mit den Partikeln (11, 12) das Endenglimmschutzmaterial (9) gebildet wird, **dadurch gekennzeichnet, dass** die Partikelmassenkonzentration (22) der Partikel (11, 12) in der Trägermatrix (10) derart gewählt wird, dass das Endenglimmschutzmaterial (9) oberhalb der Perkulationsschwelle (23) ist.

2. Verfahren gemäß Anspruch 1, wobei der Dotierungsgrad derart gewählt wird, dass die Menge an dem Dotierungselement in dem Metalloxid zwischen 0 und 30 Gewichtsprozent liegt.

3. Verfahren gemäß einem der Ansprüche 1 bis 2, wobei die Partikelmassenkonzentration (22) der Partikel (11, 12) bei mehr als 25 Gewichtsprozent liegt.

4. Verfahren gemäß einem der Ansprüche 1 bis 3, wobei die Partikel (11) aus Glimmer, Siliziumkarbid, einem undotierten Metalloxid, insbesondere Aluminiumoxid, sind.

5. Verfahren gemäß einem der Ansprüche 1 bis 4, wobei das die Partikel (11) beschichtende Metalloxid (12) aus der Gruppe gewählt wird: Metalloxid in binärer und tertiärer Mischphase, insbesondere Zinnoxid, Zinkoxid, Zinkstannat, Titanoxid, Bleioxid, Siliziumkarbid.

6. Verfahren gemäß einem der Ansprüche 1 bis 5, wobei das Dotierungselement aus der Gruppe gewählt wird: Antimon, Indium, Cadmium.

7. Verfahren gemäß einem der Ansprüche 1 bis 6, wobei die Trägermatrix (10) eine Kunststoffmatrix ist, insbesondere aus Harz.

8. Verfahren gemäß einem der Ansprüche 1 bis 7, wobei beim Einbringen der beschichteten Partikel (11, 12) in die Trägermatrix (10) diese mit einem Lösungsmittel versetzt wird, wodurch beim Verdunsten des Lösungsmittels in der Trägermatrix (10) Konvektionsströme sich ausbilden, mit denen die Partikel (11, 12) in der Trägermatrix (10) ausgerichtet werden.

9. Endenglimmschutz für eine Hochspannungsmaschine, mit einem Endenglimmschutzmaterial (9), das gemäß einem der Ansprüche 1 bis 8 hergestellt ist.

10. Endenglimmschutz gemäß Anspruch 9, wobei das Endenglimmschutzmaterial (9) als ein Lack ausgebildet ist, der auf einem Wicklungsstab der Hochspannungsmaschine aufgebracht ist.

11. Endenglimmschutz gemäß Anspruch 9, wobei das Endenglimmschutzmaterial (9) als ein Band ausgebildet ist, der auf einem Wicklungsstab der Hochspannungsmaschine aufgebracht ist.

## Claims

1. Method for producing an overhang corona shielding material (9), comprising the steps of:
doping a metal oxide with at least one doping element, so that a partly conductive material is obtained;
providing a plurality of particles (11) in platelet form;
coating the particles (11) with the doped metal oxide (12);
introducing the coated particles (11, 12) into a carrier matrix (10), so that the overhang corona shielding material (9) is formed from the carrier matrix (10) with the particles (11, 12), **characterized in that** the particle mass concentration (22) of the particles (11, 12) in the carrier matrix (10) is chosen such that the overhang corona shielding material (9) is above the percolation threshold (23).

2. Method according to Claim 1, the degree of doping being chosen such that the amount of doping element in the metal oxide lies between 0 and 30 percent by weight.

3. Method according to either of Claims 1 and 2, the particle mass concentration (22) of the particles (11, 12) lying at over 25 percent by weight.

4. Method according to one of Claims 1 to 3, the particles (11) being of mica, silicon carbide, an undoped metal oxide, in particular aluminium oxide.

5. Method according to one of Claims 1 to 4, the metal oxide (12) coating the particles (11) being chosen from the group: metal oxide in the binary and tertiary mixing phase, in particular tin oxide, zinc oxide, zinc stannate, titanium oxide, lead oxide, silicon carbide.

6. Method according to one of Claims 1 to 5, the doping element being chosen from the group: antimony, indium, cadmium.

7. Method according to one of Claims 1 to 6, the carrier matrix (10) being a polymer matrix, in particular of resin.

8. Method according to one of Claims 1 to 7, the coated particles (11, 12) being mixed with a solvent as they are introduced into the carrier matrix (10), whereby convective currents form as the solvent evaporates in the carrier matrix (10), causing the particles (11, 12) to be aligned in the carrier matrix (10).

9. Overhang corona shielding for a high-voltage machine, comprising an overhang corona shielding material (9) produced according to one of Claims 1 to 8.

10. Overhang corona shielding according to Claim 9, the overhang corona shielding material (9) being formed as a lacquer applied to a bar of a winding of the high-voltage machine.

11. Overhang corona shielding according to Claim 9, the overhang corona shielding material (9) being formed as a strip applied to a bar of a winding of the high-voltage machine.

## Revendications

1. Procédé de fabrication d'un matériau pare-effluves d'extrémité (9), comportant les étapes consistant à :
- doper un oxyde métallique avec au moins un élément de dopage, de sorte qu'un matériau semi-conducteur est produit ;
- fournir une pluralité de particules (11) en forme de plaquettes ;
- recouvrir les particules (11) avec l'oxyde métallique dopé (12) ;
- introduire les particules (11, 12) recouvertes dans une matrice de support (10), de sorte que le matériau pare-effluves d'extrémité (10) est formé de la matrice de support (10) avec les particules (11, 12), **caractérisé en ce que** la concentration massique de particules (22) des particules (11, 12) dans la matrice de support (10) est choisie de telle sorte que le matériau pare-effluves d'extrémité (9) se situe au-dessus du seuil de percolation (23).

2. Procédé selon la revendication 1, dans lequel le degré de dopage est choisi de telle sorte que la quantité de l'élément de dopage dans l'oxyde métallique se situe dans la plage de 0 à 30 % en poids.

3. Procédé selon l'une quelconque des revendications 1 à 2, dans lequel la concentration massique de particules (22) des particules (11, 12) est supérieure à 25 % en poids.

4. Procédé selon l'une quelconque des revendications 1 à 3, dans lequel les particules (11) sont du mica, du carbure de silicium, un oxyde métallique non dopé, en particulier de l'oxyde d'aluminium.

5. Procédé selon l'une quelconque des revendications 1 à 4, dans lequel l'oxyde métallique (12) recouvrant les particules (11) est choisi parmi le groupe constitué de : oxyde métallique en phase mixte binaire et tertiaire, en particulier oxyde d'étain, oxyde de zinc, stannate de zinc, oxyde de titane, oxyde de plomb, carbure de silicium.

6. Procédé selon l'une quelconque des revendications 1 à 5, dans lequel l'élément de dopage est choisi parmi le groupe constitué de : antimoine, indium, cadmium.

7. Procédé selon l'une quelconque des revendications 1 à 6, dans lequel la matrice de support (10) est une matrice en matière plastique, en particulier en résine.

8. Procédé selon l'une quelconque des revendications 1 à 7, dans lequel la matrice de support (10) est remplacée par un solvant lors de l'introduction des particules recouvertes (11, 12) dans celle-ci, grâce à quoi des courants de convexion se forment lors de l'évaporation du solvant dans la matrice de support (10), avec lesquels les particules (11, 12) sont orientées dans la matrice de support (10).

9. Protection pare-effluves d'extrémité pour une machine haute tension, comprenant un matériau pare-effluves d'extrémité (9) fabriqué selon l'une quelconque des revendications 1 à 8.

10. Protection pare-effluves d'extrémité selon la revendication 9, dans laquelle le matériau pare-effluves d'extrémité (9) est réalisé sous la forme d'un vernis qui est appliqué sur une barre d'enroulement de la machine haute tension.

11. Protection pare-effluves d'extrémité selon la revendication 9, dans laquelle le matériau pare-effluves d'extrémité (9) est réalisé sous la forme d'une bande qui est appliquée sur une barre d'enroulement de la machine haute tension.
